(19) Europäisches Patentamt
European Patent Office
Office européen des brevets

(11) Publication number: **0 420 307 A2**

(12) # EUROPEAN PATENT APPLICATION

(21) Application number: **90201520.5**

(22) Date of filing: **13.06.90**

(51) Int. Cl.[5]: **C08L 67/00**, C08G 63/60, C08K 3/34, A47J 36/04

(30) Priority: **17.06.89 NL 8901535**

(43) Date of publication of application: **03.04.91 Bulletin 91/14**

(84) Designated Contracting States: **AT BE CH DE DK ES FR GB GR IT LI NL SE**

(71) Applicant: **STAMICARBON B.V.**
**Mijnweg 1**
**NL-6167 AC Geleen(NL)**

(72) Inventor: **Van Vliet, Gerhard**
**Dopplerdomein 5D**
**NL-6229 GN Maastricht(NL)**
Inventor: **Van Asperen, Pieter Jan**
**Op de Windhaspel 9**
**NL-6191 LC Beek (L.)(NL)**
Inventor: **Bruls, Wilhelmus Gerardus Marie**
**Gr. V. Wolterhoenstraat 32**
**NL-6243 BE Meerssen(NL)**

(54) **Polymer composition.**

(57) The invention relates to a polymer composition with excellent thermal properties, comprising a thermotropic liquid-crystalline polymer processable from the melt which calcined kaolin has been added to as a filler. It has been found that the polymer composition shows improved flow properties without impairing mechanical properties.

EP 0 420 307 A2

Xerox Copy Centre

## POLYMER COMPOSITION

The invention relates to a polymer composition comprising a thermotropic liquid-crystalline polymer processable from the melt and a filler, the liquid-crystalline polymer containing aromatic units with oxycarboxyl groups, aromatic units with dicarboxyl groups and aromatic units with dioxy groups.

Such a polymer composition is known from the UK patent specification 2124236. In this patent a polymer composition is described containing 35-65 parts by weight of a liquid-crystalline polymer comprising the said aromatic units and 1-60 parts by weight of talc as a filler, the talc being very pure. The polymer composition as described shows good thermal properties and is therefore suited to be processed in heat-resistant kitchenware.

A disadvantage of such a polymer composition is an insufficient flow during the processing. Consequently, the exterior of an injection moulded moulding compound will not always be of the desired quality.

A good flow is also necessary in the production of, for instance, thin-walled packages of electronic components. Small deviations in the dimensions of such packages, caused by insufficient flow, are undesirable.

An object of the invention is to provide a polymer composition with very good thermal and mechanical properties that does not have said disadvantage.

The polymer composition according to the invention is characterized in that the polymer composition comprises:

a. 10-70 parts by weight of a calcined kaolin with an average particle size of 0.6-2 µm, and

b. 90-30 parts by weight of the thermotropic liquid-crystalline polymer with a melting temperature higher than 270¤C.

It has been found that the incorporation of the calcined kaolin not only results in surprisingly improved flow properties, but also in improved mechanical properties and in improved fusion welds of the end products.

It should be noted that EP-A-285411 describes a polymer composition consisting of 0.001-10 parts by weight kaolin to 100 parts polyphenylenesulphide (PPS). An improved flow was not found. According to EP-A-285411, the addition of kaolin to PPS results in an increased crystallization rate and in the formation of smaller PPS particles. The PPS in the polymer composition is a partially crystalline polymer, but not a thermotropic polymer. Consequently, the thermal properties are inferior by far to those of a polymer composition based on a thermotropic liquid-crystalline polymer.

Kaolin is described in detail in 'Handbook of Fillers for Plastics', pp. 143-155, of Nostrand Rheingold Company, New York, 1987. Kaolin is derived from the mineral of kaolinite, a dehydrated aluminium silicate. Kaolin is obtained from the mineral by dehydratation and has the chemical formula of $Al_2O_3$-$SiO_2$. Kaolin may contain up to a few percent by weight of metal oxides, for instance 0-1% (wt) CaO and 0-1% (wt) $Fe_2O_3$.

The polymer composition preferably comprises 10-30 parts by weight kaolin. A suspension of 20 % (wt) pure kaolin and water has a pH of 4-6.

Kaolin is commercially available on a large scale and in a plurality of compositions. The compositions distinguish themselves by, inter alia, modification of the kaolin surface. The surface is modified with, for instance, functional vinyl compounds, titanates and aminosilane. A 20 % (wt) suspension of the kaolin in the polymer composition according to the invention in water preferably has a pH of 5-10.

If the kaolin in the polymer composition according to the invention is a heat-dehydratated, i.e. calcined, compound without modification of the kaolin surface, a 20% (wt) suspension of such a kaolin in water preferably has a pH of 5-6. The pH of a 20% (wt) suspension of an unmodified kaolin in water can be influenced by the presence of metal oxides.

It has been found that addition of a kaolin of which a 20% (wt) suspension in water has a pH > 6 indeed results in an improved flow of the polymer composition, but there is also some decrease of the E modulus parallel to the direction of orientation of the liquid-crystalline polymer. If the pH is 8-10, this decrease is minimal, while the E modulus perpendicular to the direction of orientation shows a substantial improvement.

Moulding compounds in which good properties perpendicular to the direction of orientation are desirable are therefore preferably produced from a polymer composition according to the invention incorporating kaolin of which a 20% (wt) suspension in water has a pH of 8-10.

Liquid-crystalline polymers are known per se. Generally, such polymers are aromatic polyesters with a melting temperature ($T_{sm}$) higher than 230¤C. It has been found that the incorporation of kaolin into a liquid-crystalline polymer with a $T_{sm}$ lower than 270¤C does not result in an improvement of the flow. Preferably

the $T_{sm}$ is higher than 325¤C.

The liquid-crystalline polymer in the polymer composition according to the invention comprises:

a. aromatic units with an oxy and a carboxyl group,

b. aromatic units with two oxy groups, and

c. aromatic units with two carboxyl groups.

The choice of the unit with an oxy and a carboxyl group depends on the desired properties of the polymer. Generally, such a unit has a formula

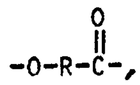

where R comprises at least one aromatic ring, for instance:

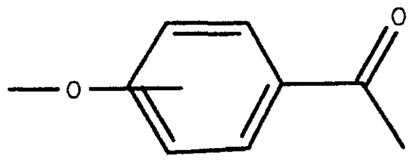

(I)

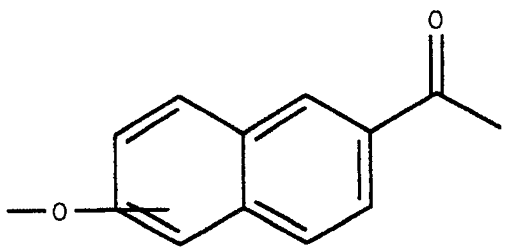

(Ia)

The liquid-crystalline polymer preferably comprises oxybenzoyl units of formula (I). These units are derived from hydroxybenzoic acid or from derivatives of it. The oxybenzoyl unit of (I) may be para or meta-substituted. Mixtures of para and meta-substituted oxybenzoyl units of fomula (I) are possible, too. The unit of formula (I) is preferably para-substituted. In the aromatic ring one or more of the hydrogen atoms may be substituted by an alkyl or alkoxy group, with one to four carbon atoms, by a halogen, for instance chlorine, bromine or fluorine, and/or by a phenyl group, which is substituted if so desired. The oxybenzoyl unit is preferably derived from p-hydroxybenzoic acid.

The polymer preferably comprises 20-70 moles % oxybenzoyl units calculated on all aromatic units.

Units with two oxy groups generally have a formula -O-R-O-, where R comprises at least one aromatic ring, examples are:

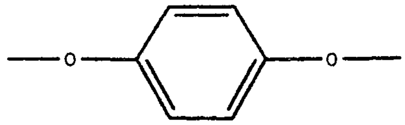

(IIa)

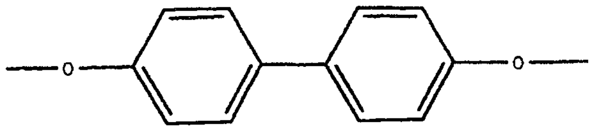

(IIb)

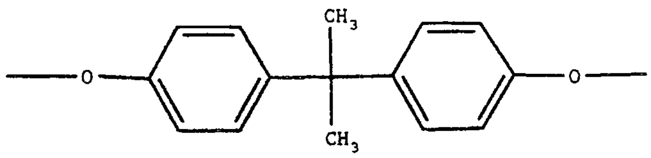

(IIc)

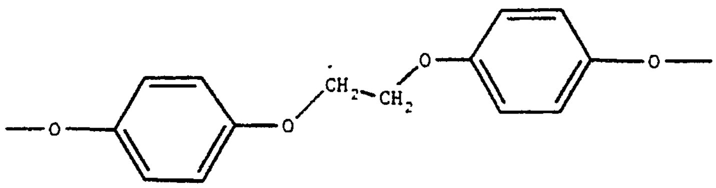

(IId)

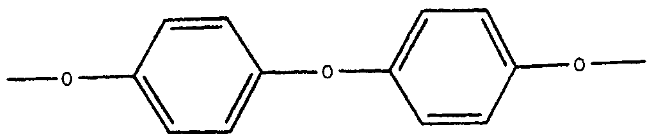

(IIe)

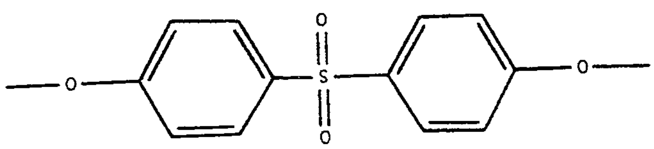

(IIf)

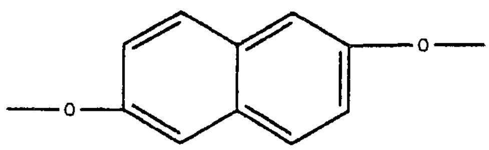

(IIg)

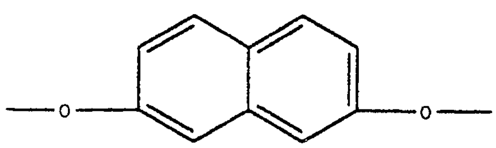

(IIh)

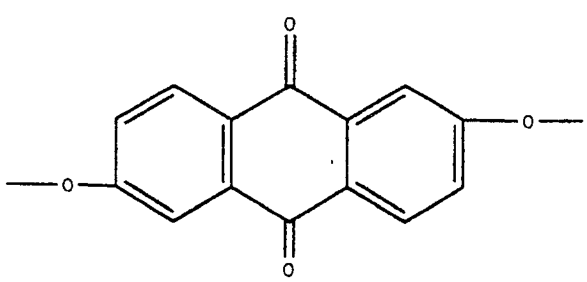

(IIi)

The liquid-crystalline polymer may also comprise mixtures of the above-mentioned dioxy units. The

liquid-crystalline polymer preferably comprises dioxybenzyl (IIa) and/or biphenoxy (IIb) groups, more particularly a biphenoxy group with the formula (IIb). The last-mentioned compound can be obtained from p,p′-biphenol. In the aromatic rings one or more hydrogen atoms may be substituted by an alkyl group, alkoxy group, a halogen or a phenyl group, which last-mentioned may again be substituted in itself. The polymer preferably comprises, calculated on all aromatic units, 5-40 moles % units with two oxy groups.

The aromatic units with two carboxyl groups can be obtained from aromatic dicarboxylic acids or from the corresponding esters, for instance terephthalic acid, isophthalic acid, 2,6-naphthalenedicarboxylic acid, 2,7-naphthalenedicarboxylic acid, bibenzoic acid, 4,4′-dicarboxyldiphenylsulphone, 4,4′-dicarboxyldiphenylethane, 4,4′-dicarboxyldiphenylsulphide, 4,4′-dicarboxylphenylether, 4,4′-dicarboxyldiphenylmethane, 4,4′-dicarboxyldiphenoxyethane, 2,2-bis (4-carboxyphenyl)-propane.

The aromatic units with two carboxyl groups have preferably been obtained from terephthalic acid, isophthalic acid and/or the derivatives thereof. In the aromatic ring one or more hydrogen atoms may be substituted by an alkyl group, alkoxy group, a halogen or a phenyl group, which last-mentioned, too, may be substituted again. The units with two carboxyl groups are preferably obtained from unsubstituted terephthalic acid and/or isophthalic acid. The polymer preferably comprises, calculated on all aromatic units, 5-40 moles % units with two carboxyl groups.

If so desired, the polymer may comprise also 0-30 moles % of an amine-containing unit, which can be obtained, inter alia, from substances known in the art, for instance p-aminobenzoic acid, p-amino-phenol, p-N-methyl-aminophenol, p-phenylenediamine, N-methyl-p-phenylenediamine, N,N′-dimethyl-p-phenylenediamine, m-amino-phenol, 4-amino-1-naphthol, 4-amino-4′-hydroxydiphenyl, 4-amino-4′-hydroxyphenylether, 4-amino-4′-hydroxydiphenylmethane, 4-amino-4′-hydroxydiphenylethane, 4-amino-4′-hydroxydiphenylsul-phone, 4-amino-4′-hydroxydiphenylsulphide, 4,4′-diaminophenyl-sulphide, 4,4′-diaminodiphenylsulphone, 2,5-diaminotoluene, 4,4′-ethylenediamine, 4,4′-diaminodiphenoxyethane, 4-4′-diaminodi-phenylmethane, 4,4′-diaminodiphenylether.

In addition to the above-mentioned units, the polymer may also comprise sulphone, urethane, carbonate, keto, imide, sulphide, anhydride and/or thioester groups.

The preparation of the liquid-crystalline polymer can be effected in the manner known in the art by means of a polycondensation reaction by reacting with each other in the desired amounts, in an inert atmosphere at elevated temperature and reduced pressure and after acetylation, the monomers to be used. Preferably in the presence of a catalyst, for instance magnesium and/or zinc acetate.

The polymer composition according to the invention can be prepared by mixing the two components in a mixing device. In the process possible fillers and/or additives, for instance stabilizers, lubricants and/or solvents, colourants, pigments, organic and inorganic fillers, etc., may be added in any manner known for that purpose and in any desired order of mixing the components. It is all but obvious that the components can all of them also be mixed with each other at once. Mixing devices known in the art are Banbury mixers and single or twin-screw extruders.

It has been found that the polymer composition is suited for taking up 0-50 parts by weight of a second filler, calculated on the whole polymer composition. More particularly 0-30 parts by weight. The second filler added to the polymer composition is preferably glass fibre, carbon and/or titaniumdioxide.

The polymer composition preferably comprises:

A. 10-30 parts by weight of a calcined kaolin, as a first filler,

B. 70-90 parts by weight of a liquid-crystalline polymer comprising:

- 20-70 moles % units obtained from parahydroxybenzoic acid,
- 5-50 moles % units obtained from hydroquinone and/or p,p′-biphenol,
- 5-50 moles % units obtained from terephthalic and/or isophthalic acid,

C. 0-30 parts by weight of a second filler.

The moulding compound obtained from the polymer composition is preferably subjected to after-condensation in the solid phase for 3-40 hours at 270-360¤C. The solid phase after-condensation has a positive effect on the mechanical properties of the moulding compound.

The polymer composition according to the invention is particularly suited to be processed into heat-resistant ovenware by means of injection moulding. The good flow properties lead to moulding compounds with a fine and even surface.

The polymer composition according to the invention is also particularly suited to be processed into thin-walled packages for electronic components. In the processing into packages for integrated circuits, etc. the flow properties are particularly important. Such packages are preferably produced by means of precision injection moulding.

The invention is further elucidated by the following examples without being limited thereto.

Examples I up to and including IX, comparative examples A, B

Into a reaction vessel with stirrer, nitrogen feed tube and reflux condenser 850 grammes acetic anhydride was introduced. To it were added:

3.2 moles p-hydroxybenzoic acid,
1.6 moles terephthalic acid,
1.6 moles p,p′-biphenol, and
1 g zinc acetate.

The suspension was heated to 155¤C and maintained at this temperature for 1-3 hours. The reflux condenser was subsequently converted into a distillation cooler. The temperature was increased by 46¤C/hour to 315¤C and subsequently maintained until the desired conversion was reached (92%).

After cooling to room temperature, the liquid-crystalline polymer (LCP) obtained was ground, subjected to after-condensation (12 hours, 365¤C) and characterized by means of Differential Scanning Calorimetry (DSC). Melting temperature = 401¤C.

In the examples the following substances were used:

1. Liquid-crystalline polymer (LCP) according to the above recipe.
2. SATINTONE W/Whitetex$^{R}$, kaolin of the firm of Engelhard. This is a calcined $Al_2Si_2(OH)_4$. Average particle size 1.4 μm, pH 5.9.
3. SATINTONE$^{R}$ 5, a calcined kaolin of the firm of Engelhard; average particle size 0.8 μm; pH 5.5.
4. Translink 37, a calcined kaolin of the firm of Engelhard, the surface of which is modified with a functional vinyl group; average particle size 1.4 μm.
5. Micro-Talc, I.T. Extra, a very pure talc ($SiO_2/MgO$) of the firm of Norwegian Talc.

The compounding of the liquid-crystalline polymer and the kaolin was effected on a ZSK-30 twin-screw extruder.

Of the polymer composition obtained spiral flow measurements were made on an Arburg allrounder injection moulding machine (220-90-300) at 390¤C. Also, using the same machine, film gate mouldings were injection moulded (3.2 mm thick). Of the resulting film gate mouldings the E modulus (ASTM D-790) was measured, perpendicular (perp.) as well as parallel (//) to the direction of injection moulding.

The composition and the results are mentioned in table 1.

Table 1

| Ex. | LCP %(wt) | Kaolin, %(wt) | | | | E modulus, N/mm$^2$ | | Spiral flow cm |
|---|---|---|---|---|---|---|---|---|
| | | 2 | 3 | 4 | talcum | // | perp. | |
| I | 90 | 10 | - | - | - | 14,335 | 3585 | 85.5 |
| II | 90 | - | 10 | - | - | 12,145 | 2845 | 94.4 |
| III | 90 | - | - | 10 | - | 12,240 | 3200 | 79.6 |
| IV | 80 | 20 | - | - | - | 13,155 | 3705 | 84.9 |
| V | 80 | - | 20 | - | - | 12,115 | 3860 | $\gg$ 115 |
| VI | 80 | - | - | 20 | - | 12,045 | 3100 | 79.2 |
| VII | 70 | 30 | - | - | - | 12,375 | 3725 | 94.5 |
| VIII | 70 | - | 30 | - | - | 12,810 | 3750 | $\gg$ 115 |
| IX | 70 | - | - | 30 | - | 11,800 | 3425 | 84.1 |
| A | 70 | - | - | - | 30 | 9885 | 3500 | 68.8 |
| B | 100 | - | - | - | - | 14,015 | 3170 | 37.8 |

According to the table it seems that the spiral flow length for the kaolin-filled liquid-crystalline polymers has increased considerably. The E modulus has shown a substantial improvement on the talc-filled polymers.

Examples X up to and including XIII and comparative examples C, D

Ditto as the above-mentioned examples, but this time glass fibre (RO8FXI, Owens Corning) was taken

up in the composition also, in addition to kaolin.

The kaolin was Satintone W/Whitetex[R].

Table 2

| Ex | LCP %(wt) | Kaolin %(wt) | Glass fibre %(wt) | E modulus N/mm$^2$ | | Flow spiral cm |
|---|---|---|---|---|---|---|
| | | | | // | perp. | |
| X | 65 | 20 | 15 | 12250 | 4070 | 91.0 |
| XI | 50 | 20 | 30 | 11970 | 5055 | 92.6 |
| XII | 68 | 16 | 16 | 12380 | 3375 | 91.7 |
| C | 70 | 0 | 30 | 9875 | 3940 | 51.7 |
| D | 60 | 0 | 40 | 10215 | 4050 | 43.4 |

The results show that not only the flow spiral length has improved of the kaolin containing compounds, but also the E modulus, parallel.

The combination of glass fibre and kaolin resulted in an improved fusion weld.

<u>Examples XIII up to and including XVI</u>

In these examples the following substances were used:

1. Liquid-crystalline polymer as in example I.
5. Ultralink PA 100, a modified kaolin of the firm of Engelhard with a pH ≈ 8.5. Average particle size is 1.3 µm.
6. Translink HF 900, a calcined kaolin of the firm of Engelhard with an average particle size of 1.8 µm. pH ~ 9.

The surface is modified with an aminosilane compound.

The compounding was effected in the same way as mentioned in example I. The composition and results are mentioned in table 3.

Table 3

| Ex. | LCP %(wt) | Kaolin, % (wt) | | E modulus, N/mm$^2$ | | Spiral flow cm |
|---|---|---|---|---|---|---|
| | 1. | 5. | 6. | // | perp. | |
| XIII | 80 | 20 | - | 11,350 | 4665 | 87.8 |
| XIV | 80 | - | 20 | 11,900 | 4625 | ≫115 |
| XV | 70 | 30 | - | 11,440 | 4285 | 100.6 |
| XVI | 70 | - | 30 | 10,595 | 4550 | 106.4 |

From the above-mentioned results it appears that a kaolin with a pH of between 8 and 10 has a good flow and an improved E modulus, perp.

## Claims

1. Polymer composition comprising a thermotropic liquid-crystalline polymer processable from the melt and a filler, the liquid-crystalline polymer containing aromatic units with oxycarboxyl groups, aromatic units with dicarboxyl groups and aromatic units with dioxy groups, characterized in that the polymer composition comprises:

a. 10-70 parts by weight of a calcined kaolin with an average particle size of 0.6-2 µm, and

b. 90-30 parts by weight of the thermotropic liquid-crystalline polymer with a melting temperature higher than 270¤C.

2. Polymer composition according to claim 1, characterized in that the polymer composition comprises a calcined kaolin, a 20% (wt) suspension of which in water has a pH of 5-10.

3. Polymer composition according to any one of claims 1-2, characterized in that the polymer composition comprises:

a. 10-70 parts by weight of a calcined kaolin as a first filler,

b. 90-30 parts by weight of a thermotropic liquid-crystalline polymer comprising:

- 20-70 moles % units obtained from parahydroxybenzoic acid;
- 5-50 moles % units obtained from hydroquinone and/or biphenol;
- 5-50 moles % units obtained from terephthalic acid and/or isophthalic acid; and

c. 0-50 parts by weight of a second filler.

4. Polymer composition according to claim 3, characterized in that the polymer composition comprises:

a. 10-30 parts by weight of a calcined kaolin as a first filler;

b. 70-90 parts by weight of the thermotropic liquid-crystalline polymer;

c. 0-30 parts by weight of a second filler.

5. Moulding compound obtained from the polymer composition according to any one of claims 1-4.

6. Heat-resistant ovenware obtained from the polymer composition according to any one of claims 1-4.